# EUROPÄISCHE PATENTSCHRIFT

(11) **EP 3 637 062 B1**
(45) Veröffentlichungstag und Bekanntmachung des Hinweises auf die Patenterteilung: **04.11.2020**
(21) Anmeldenummer: 19195697.8
(22) Anmeldetag: 05.09.2019
(51) Int. Cl.: G01D 11/24, G01D 13/00

(54) **SENSOREINHEIT**
SENSOR UNIT
UNITÉ DE CAPTEUR

(30) Priorität: 09.10.2018 DE 102018124845
(43) Veröffentlichungstag der Anmeldung: 15.04.2020
(73) Patentinhaber: SICK AG, 79183 Waldkirch (DE)
(72) Erfinder: Döbele, Christian, 79341 Kenzingen (DE); Wiethege, Friedhelm, 79350 Sexau (DE)

(56) Entgegenhaltungen:
- EP-A1- 2 664 900
- EP-A1- 2 690 412
- WO-A2-2007/131372
- DE-A1- 3 610 613
- DE-A1- 19 624 494
- DE-A1-102015 118 532
- DE-B4-102015 214 008
- DE-U1-202009 006 481
- DE-U1-202009 012 588
- DE-U1-202011 052 067

## Beschreibung

Die Erfindung betrifft eine Sensoreinheit nach Anspruch 1.

Aus der EP 1 563 579 B1 ist ein Gehäuse zur Aufnahme eines elektrischen Gerätes, insbesondere eines Schaltgerätes oder eines Sensors, mit mindestens einer Anzeigevorrichtung zur Anzeige verschiedener elektrischer Zustände bekannt. Die Anzeigevorrichtung besteht dabei aus einer Mehrzahl von gleichfarbigen Leuchteinrichtungen.

Die DE 103 43 529 A1 offenbart eine Vorrichtung zur optischen Übermittlung von Informationen, insbesondere zur optischen Anzeige von Schaltzuständen eines Schaltgerätes oder Sensors, mit einer Mehrzahl von Anzeigeeinrichtungen zur optischen Darstellung der zu übermittelnden Funktionen. Zur Aufnahme der Anzeigeeinrichtung ist ein transparentes Gehäuseteil vorgesehen, welches zur Vermeidung eines optischen Übersprechens, insbesondere bei gleichzeitig aktiven Anzeigeeinrichtungen, mit optischen Trennflächen in n Segmente unterteilt ist, in denen die Anzeigeeinrichtungen positioniert sind. Das transparente Gehäuseteil, das durch eine Leiterplatte in Segmente unterteilt ist, erstreckt sich um den gesamten Umfang des Gehäuses. Nachteilig dabei ist, dass eine solche Vorrichtung sehr aufwändig in der Herstellung ist.

Die DE19624494A1 offenbart eine Sensoranordnung mit einem insbesondere fluiddicht verschlossenen Gehäuse und einer in einem Sensorraum des Gehäuses angeordneten Sensoreinheit, die wenigstens einen insbesondere optischen oder induktiven Sensor umfasst, wobei der Sensorraum zumindest teilweise mit einem vorzugsweise trockenen Füllmaterial von körniger Konsistenz aufgefüllt ist.

Die EP2690412A1 offenbart einen Sensor, mit wenigstens einem Gehäuse, welches einen Gehäuseinnenraum einschließt, einer Leiterplatte mit Elektronikkomponenten, welche innerhalb des Gehäuseinnenraumes angeordnet ist, einem Sensorelement, welches mit der Leiterplatte elektrisch verbunden ist und innerhalb des Gehäuseinnenraumes angeordnet ist, wobei das Sensorelement kraftschlüssig mit dem Gehäuse verbunden ist, so dass das Sensorelement im Gehäuseinnenraum in Position gehalten ist. Verfahren zur Herstellung eines Sensors.

Die DE202009006481U1 offenbart ein optoelektronisches Gerät, mit einer Schaltungsanordnung, welche wenigstens einen optoelektronischen Wandler zum Aussenden oder zum Detektieren von optischer Strahlung aufweist, sowie mit einem Gehäuse, welches aus einem Unterteil und einem auf diesen aufgesetzten und an diesem arretierten Oberteil zusammengesetzt ist, wobei sich zwischen dem Unterteil und dem Oberteil ein die Schaltungsanordnung aufnehmender Hohlraum befindet und das Gehäuse wenigstens eine Öffnung als Durchlass für von dem optoelektronischen Wandler ausgesandte oder zu detektierende optische Strahlung aufweist.

Die DE102015214008B4 offenbart eine Sensorelementeinrichtung für einen kapazitiven Berührungsschalter einer Bedieneinrichtung. Die Sensorelementeinrichtung weist ein Sensorelementgehäuse aus Kunststoff, einen durchgehenden Lichtleitkanal von der Unterseite zur Oberseite sowie ein kapazitives Sensorelement an der Oberseite auf. Das Sensorelement weist mehrere längliche Abschnitte auf, wobei mindestens ein Abschnitt an einer Seite an dem Sensorelementgehäuse entlang verläuft von der Oberseite bis mindestens zu einer Ebene, die von der Unterseite des Sensorelementgehäuses gebildet ist. Das Sensorelement besteht aus Metall bzw. ist metallisch und das Sensorelementgehäuse ist in einem Kunststoffspritzgussverfahren zusammen mit dem Sensorelement hergestellt bzw. das Sensorelementgehäuse ist an das Sensorelement angespritzt.

Die DE3610613A1 offenbart ein Messinstrumenten-Gehäuse aus Kunststoff, bei dem eine offene quadratische Frontseite durch eine Skalenplatte abgeschlossen ist, die ihrerseits durch eine Glasscheibe abgedeckt ist, wobei als Abschluss nach außen ein Frontrahmen auf das Gehäuse aufschnappbar aufgesetzt ist, wobei das einteilig ausgebildete Gehäuse auf seiner der Skalenplatte gegenüberliegenden Rückseite durch eine quadratische Grundplatte aus Kunststoff abgeschlossen ist, die angeformte Elemente zur Befestigung von Messwerken oder dergl. aufweist, und dass ein aus Metall bestehender, der Querschnitts- und Umfangsform des Gehäuses entsprechender Gehäusemantel vorgesehen ist, der von der Seite der Grundplatte her auf das Gehäuse aufschiebbar ist, wobei die Umfangsabmessungen des Gehäuses und des Gehäusemantels in der Weise aufeinander abgestimmt sind, dass das Gehäuse sowohl ohne als auch mit Gehäusemantel in einen genormten Schalttafelausschnitt passend einsetzbar ist.

Die WO2007131372A2 offenbart einen Näherungssensor, welcher ein Sensorgehäuse mit einem äußeren Gehäusemantel und einem an dessen Innenwand mittels Spritzgusstechnik angespritzten inneren Gehäusemantel umfasst. Ein angeformter Boden unterteilt das Gehäuseinnere in zwei Teilräume. In diesen Boden sind Kontaktelemente eingelassen, mit denen lötfreie Verbindungen mit Kontaktflächen auf einem Print erstellt werden können. Das Sensorgehäuse wird frontseitig durch Aufschweißen einer Kunststoffkappe abgeschlossen. Ein Vergießen des Sensorgehäuses mit einem aushärtenden Gießharz ist nicht erforderlich.

Die DE 20 2009 012588 U1 offenbart einen Sensor mit einer Frontscheibe und einem optischen Anzeigeelement, z.B einem schlauchförmigen Lichtleiter.

Der Erfindung liegt die Aufgabe zugrunde, eine Sensoreinheit anzugeben, welche trotz kostengünstiger Herstellung eine zuverlässige Anzeige des Zustandes der Sensoreinheit ermöglicht.

Erfindungsgemäß ist die Aufgabe dadurch gelöst, dass das Gehäuse der Sensoreinheit vollständig aus einem Kunststoff besteht, welches von Metallelementen ummantelt ist. Dies hat den Vorteil, dass ein Hybridgehäusekonzept ermöglicht wird, bei welchem eine verbesserte Anzeige bei einem einfach herzustellenden Gehäuse möglich ist. Bei dem Gehäusekonzept erzeugt das durch die Metallteile eingebrachte Gewicht eine gewisse Wertigkeit. Gleichzeitig ist ein auffälliges Herausstechen des Designs aufgrund einer strukturierten Oberflächenbehandlung der Metallteile möglich. Es wird ein kostentechnisch günstigeres Gehäuse im Gegensatz zu Volledelstahlgehäusen bei gleichzeitig höherer Wertigkeit und Robustheit gegenüber gängigen Kunststoffgehäusen geschaffen. Längenausdehnungskoeffizienten, die bei unterschiedlichen Materialien und großen Temperaturwechseln abgefangen werden müssen, müssen somit nicht weiter berücksichtigt werden. Die Metallelemente sind nicht an der Dichtigkeit des inneren Sensorsystems beteiligt.

Erfindungsgemäß umfasst die Sensoreinheit ein lichtdurchlässiges Gehäuse, in welchem mindestens eine Lichtquelle zur optischen Anzeige eines Zustandes eines sich im Gehäuse befindlichen Sensorsystems angeordnet ist. Dadurch kann der Zustand des Sensors visuell erfasst werden.

Vorteilhafterweise sind die Metallelemente als Seitenelemente zur Abdeckung der Seiten des aus Kunststoff bestehenden Gehäuses und als ein Mantelelement zur Abdeckung des aus Kunststoff bestehenden Gehäuses zwischen den Seitenelementen ausgebildet. Das Gehäuse, welches bevorzugt ein Thermoplast ist, ist dabei hochtemperaturstabil und äußerst schlagzäh. Gleichzeitig ist eine chemische Hochbeständigkeit gegeben. Durch die Verwendung der Metallelemente ist eine Lebensmitteltauglichkeit garantiert. Diese Metallelemente weisen eine leichte Biegeumformbarkeit auf, was deren Montage an dem aus Kunststoff bestehenden Gehäuse erleichtert.

In einer Ausgestaltung sind die Metallelemente stoffschlüssig mit dem aus Kunststoff bestehenden Gehäuse verbunden. Dabei sind die Metallelemente dicht auf das Kunststoffgehäuse aufgebracht, um Spalten zwischen den Metallelementen und dem Kunststoffgehäuse zu unterbinden, wodurch Wash-Down Applikationen möglich sind oder hygienische Anwendungen möglich werden. Mögliche Undichtigkeiten zwischen den Metallelementen und dem aus Kunststoff bestehenden Gehäuse vermeiden dabei einen optoelektronischen Sensorausfall. Die vorhandenen Schnittstellen dichten immer Kunststoff zu Kunststoff ab, wobei die Metallteile zur Kunststoffabdichtung keinen Einfluss auf die optoelektronische Funktionalität der Sensoreinheit haben.

In einer Variante ist das aus Kunststoff bestehende Gehäuse in die Metallelemente eingespritzt. Dadurch wird eine besonders hohe Dichtigkeit zwischen Metallelementen und Gehäuse erreicht.

In einer Ausführungsform sind die Metallelemente in dem Kunststoff zur Bildung eines nahtlosen Übergangs von einem Metallelement zu einem anderen Metallelement eingelassen. Dadurch wird ein umlaufender Übergang zwischen Mantelelement und Seitenelement erreicht, welcher dezent oder hervorstechend gestaltet werden kann.

In einer Weiterbildung ist auf dem aus Kunststoff bestehenden Gehäuse zwischen den Metallelementen eine flächige Frontscheibe angeordnet. Durch eine solche visuell hervorgehobene Leuchtfläche erfolgt eine Erweiterung für bestehende Anzeigefunktionalitäten mit z.B. gegebenem zusätzlichen Informationsgehalt, wie einen Sensorstatus.

In einer Ausgestaltung ist die flächige Frontscheibe stoffschlüssig mit dem aus Kunststoff bestehenden Gehäuse verbunden. Eine eigenständige Frontscheibe kann dabei auf das Kunststoffgehäuse geschweißt oder geklebt werden.

In einer Alternative ist die flächige Frontscheibe durch einen Spritzgießprozess direkt in das aus Kunststoff bestehende Gehäuse integriert. Dadurch wird die Dichtfähigkeit der Sensoreinheit erhöht.

Erfindungsgemäß ist zwischen dem Mantelelement und den Seitenelementen eine als Lichtauskoppelfläche dienende erhabene Wulst des aus Kunststoff bestehenden Gehäuses ausgebildet. Mittels solcher Leuchtstreifenanzeigen lässt sich der Informationsgehalt zusätzlich zur Frontscheibe erhöhen, wobei gleichzeitig durch ein solches Leuchtringband zusätzliche Designelemente geschaffen werden.

Um den Informationsgehalt bei der Ausgabe der Anzeige zu erhöhen, ist an den Seitenteilen und/oder dem Mantelteil mindestens eine punktuelle oder linienförmige Lichtauskoppelfläche ausgebildet.

In einer Variante sind in dem aus Kunststoff bestehenden Gehäuse mehrere Lichtquellen mit verschiedenen Abstrahlrichtungen zur Übertragung des abgestrahlten Lichtes in verschiedene Lichtauskoppelflächen angeordnet. Zur Lichtaussendung, welches als Lauflicht oder partielle Beleuchtung ausgebildet ist, werden LEDs und Strahlformen verwendet, welche das Licht homogen an die Lichtauskoppelflächen verteilen.

In einer weiteren Ausgestaltung ist in dem aus Kunststoff gebildeten Gehäuse eine zentrale Lichtquelle positioniert, die mit einem Lichtleiter zur Übermittlung des von der zentralen Lichtquelle erzeugten Lichtes an eine Lichtauskoppelfläche verbunden ist. Diese zentrale Lichtquelle koppelt das Licht in den im Inneren des Kunststoffgehäuses umlaufenden Lichtleiter ein, mittels welchem das Licht gleichmäßig an die Auskoppelflächen verteilt wird.

In einer weiteren Variante ist mindestens ein elektrisches Anschlusselement integraler Bestandteil des aus Kunststoff bestehenden Gehäuses, wobei das über dem Anschlusselement liegende Metallelement eine mit dem Anschlusselement fluchtende Ausnehmung zum Umfassen des das Gehäuse überragenden elektrischen Anschlusselementes aufweist. Somit sind alle elektrischen Teile der Sensoranordnung Bestandteil des integralen, aus Kunststoff bestehenden Gehäuses, weshalb eine hohe Abdichtung gegen äußere Einflüsse des Sensorsystems möglich ist. Das aus Kunststoff bestehende Gehäuse bildet dabei eine abgeschlossene Dichteinheit mit voller optoelektronischer Funktion.

Vorteilhafterweise sind in dem aus Kunststoff gebildeten Gehäuse Durchgangsbohrungen zur Befestigung der Sensoreinheit ausgebildet. Die Metallelemente weisen somit nur Anschlussschnittstellen auf, um die Anschlusstechnik mit Gegentechnik zu verbinden.

Die Erfindung lässt zahlreiche Ausführungsformen zu. Eine davon soll anhand der in der Zeichnung dargestellten Figuren näher erläutert werden.

Es zeigen:
- Fig. 1: ein Ausführungsbeispiel der erfindungsgemäßen Sensoreinheit,
- Fig. 2: eine Explosionsdarstellung der erfindungsgemäßen Sensoreinheit,
- Fig. 3: ein Ausführungsbeispiel des Dichtprinzips der Sensoreinheit,
- Fig. 4: ein weiteres Ausführungsbeispiel des Dichtprinzips der Sensoreinheit,
- Fig. 5: ein weiteres Ausführungsbeispiel des Dichtprinzips der Sensoreinheit,
- Fig. 6: ein weiteres Ausführungsbeispiel des Dichtprinzips der Sensoreinheit,
- Fig. 7: ein weiteres Ausführungsbeispiel des Dichtprinzips der Sensoreinheit,
- Fig. 8: ein weiteres Ausführungsbeispiel des Dichtprinzips der Sensoreinheit,
- Fig. 9: ein Ausführungsbeispiel für eine Anschlusstechnik der Sensoreinheit,
- Fig. 10: ein Ausführungsbeispiel eines Anzeigemodus der Sensoreinheit,
- Fig. 11: ein weiteres Ausführungsbeispiel des Anzeigemodus der Sensoreinheit,
- Fig. 12: ein Ausführungsbeispiel für eine Befestigung der Sensoreinheit.

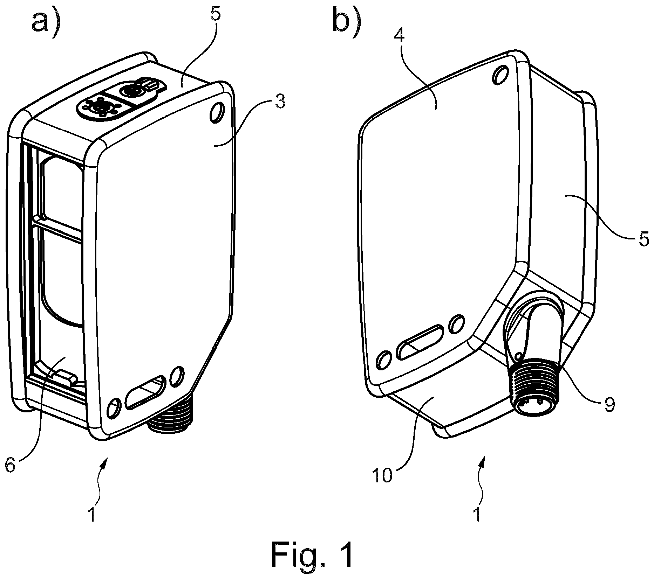

In Fig. 1 ist ein Ausführungsbeispiel der erfindungsgemäßen Sensoreinheit in zwei Ansichten von außen dargestellt. Die Sensoreinheit 1 weist dabei ein vollständig aus Kunststoff bestehendes inneres Gehäuse 2 auf, welches an den Seiten mit zwei Seitenelementen 3, 4 abgedeckt ist. Ein Mantelelement 5 ummantelt das aus Kunststoff bestehende Gehäuse 2 zwischen den beiden Seitenelementen 3, 4. Zwischen den Seitenelementen 3, 4 und dem Mantelelement 5 ist eine lichtdurchlässige Frontscheibe 6 angeordnet.

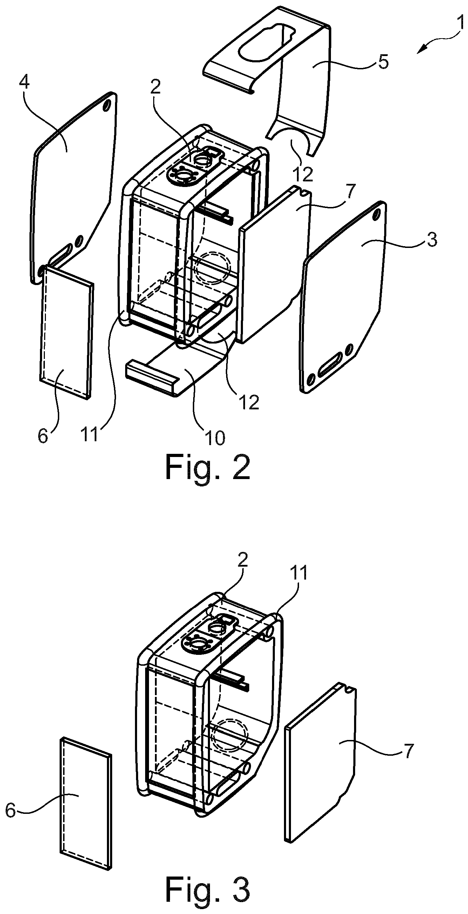

In der Fig. 2 ist eine Explosionsdarstellung der Sensoreinheit 1 gezeigt. Im Zentrum der Sensoreinheit 1 befindet sich das vollständig aus Kunststoff bestehende Gehäuse 2, in dem ein Sensorsystem 7 positioniert ist. Nach dem Einbringen des Sensorsystems 7 in das aus Kunststoff bestehende Gehäuse 2 werden an beiden Hauptflächen des aus Kunststoff bestehenden Gehäuses 2 die Seitenelemente 3, 4 aus Metall angebracht. Zwischen den beiden Seitenelementen 3, 4 ist an einer Längsseite des Gehäuses 2 aus Kunststoff die als Leuchtfläche ausgebildete Frontscheibe 6 angeordnet. Mittels des Mantelelementes 5, welche eine klammerähnliche Geometrie aufweist, wird die Sensoreinheit 1 an den Schmalwänden abgedeckt, wobei ein elektrisches Anschlusselement 9, vorzugsweise ein Stecker, zwischen dem Mantelelement 5 und einem metallischen Bodenelement 10 angeordnet ist.

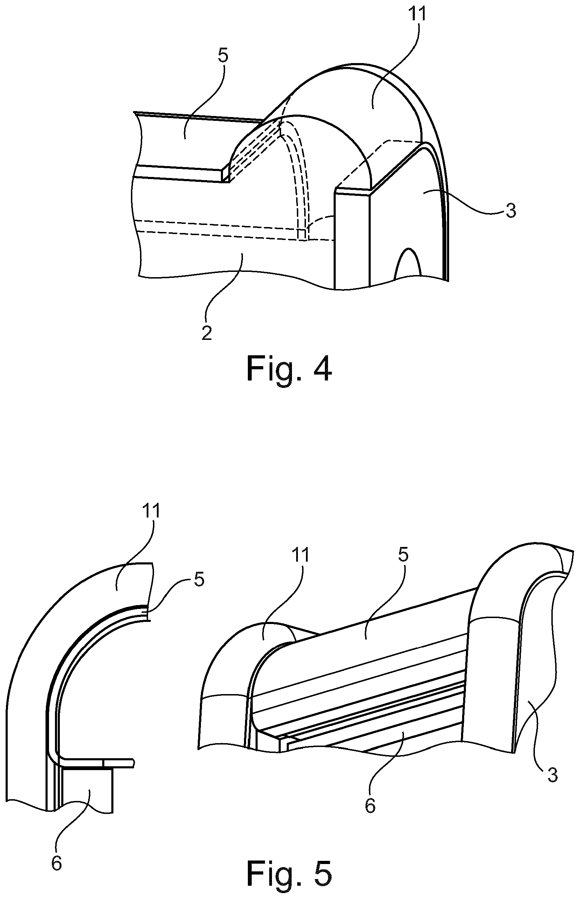

In Fig. 3 ist ein Dichtprinzip der Sensoreinheit 1 dargestellt. Das aus Kunststoff bestehende Gehäuse 2 bildet zusammen mit der Frontscheibe 6 und dem Sensorsystem 7 eine abgeschlossene Dichteinheit, wobei die elektronische Funktion voll in dem aus Kunststoff bestehenden Gehäuse 2 integriert ist. Die beispielsweise aus einem Edelstahl bestehenden Metallteile 3, 4, 5 sind gemäß Fig. 4 dicht auf das aus Kunststoff bestehende Gehäuse 2 aufgebracht. Das Mantelelement 5 kann einteilig oder mehrteilig aufgebaut sein, wobei bei einem mehrteiligen Aufbau die Relativbewegung vom Metall zu Kunststoff bei Temperaturwechseln ausgeglichen werden kann.

Das Gehäuse 2 aus Kunststoff weist eine um die Seitenelemente 3, 4 umlaufende Wulst 11 auf, welche das Mantelelement 5 und die Frontscheibe 6 überragt. Die Wulst 11 bildet einen umlaufenden Übergang zwischen dem Seitenelement 3 und dem Mantelelement 5. Durch das Einlassen des Mantelelementes 5 bzw. des Seitenelementes 3, 4 in den Kunststoff bildet sich ein nahtloser Übergang vom Mantelelement 5 zum Seitenelement 3 bzw. 4. Dieser Übergang kann dezent oder hervorstechend gestaltet werden Das Gehäuse 2 kann dabei einfarbig, wie beispielsweise aus einem naturtransparenten oder milchig-blauen Polyphenylsulfon gebildet sein. Dabei sind mehrere Materialien vorstellbar. Neben den PSU PPSU sind auch PVDF oder auch klassische Kunststoffe vorstellbar. Die Wahl des Kunststoffes orientiert sich hierbei an der jeweiligen Applikation, nämlich den Umweltbedingungen, den chemischen Beständigkeiten, den Ultravioletlicht-Bedingungen, den Schlagbeanspruchungen, und/oder den Einsatztemperaturen. Bei der Verwendung eines Zweikomponenten-Spritzprozesses zur Herstellung des aus Kunststoff bestehenden Gehäuses kann gleiches Kunststoffmaterial mit unterschiedlichen Farben ausgebildet sein.

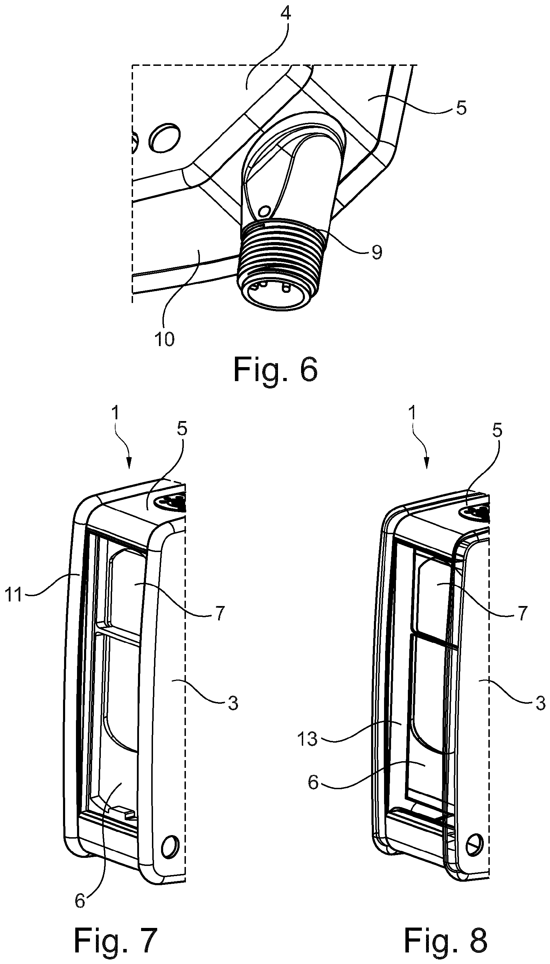

Fig. 5 zeigt das Einfalten eines Metallteiles, wie beispielsweise des Mantelelementes 5, in das Gehäuse 2 unterhalb der Wulst 11. Daraus ergibt sich eine saubere Abschlusskante, wobei das Mantelelement 5 sowohl haptisch wie auch visuell nicht mehr als Metallelement wahrgenommen wird. Bei einer solchen Ausgestaltung ist ein Heraushebeln des Mantelelementes 5 aus der Sensoreinheit 1 sehr unwahrscheinlich. Das Zusammentreffen der Metallteile 5, 10 wird im Bereich der Anschlusstechnik durch das elektrische Anschlusselement 9 abgedeckt, wobei für das Anschlusselement 9 lediglich ein Ausnehmung 12 im Mantelelement 5 und im Boden 10 notwendig ist (Fig. 6).

Hinsichtlich der optischen Schnittstellen ist das Sensorsystem 7 bereits als transparente Anzeigeschnittstelle im transparenten, aus Kunststoff bestehenden Gehäuse 2 integriert. Wie aus Fig. 7 ersichtlich, kann eine eigenständige Frontscheibe 6 auf das aus Kunststoff bestehende Gehäuse 2 geschweißt oder geklebt werden. Die Oberfläche der Frontscheibe 6 kann mit einer kratzsicheren Beschichtung bedeckt werden.

In einer Alternative, die in Fig. 8 dargestellt ist, kann die Frontscheibe 6 durch einen Spritzgießprozess direkt in das aus Kunststoff bestehende Gehäuse 2 integriert werden. Die Kratzfestigkeit wird dabei über ein zusätzlich aufgebrachtes Hartglas bzw. Panzerglas 13 realisiert.

Wie bereits erläutert, ist die Aufnahme des elektrischen Anschlusselementes 9 in dem aus Kunststoff bestehenden Gehäuse 2 integriert. Das Mantelelement 5 weist lediglich die als Durchgangsloch ausgebildete Ausnehmung 12 auf. Das elektrische Anschlusselement 9 kann hier beim Aufeinandertreffen von zwei Metallelementen, wie dem Mantelelement 5 und dem Bodenelement 10, diese zusätzlich niederhalten, um die Festigkeit der Mantelelemente 5, 10 auf dem aus Kunststoff bestehenden Gehäuse 2 zusätzlich zu unterstützen. Da das Sensorsystem 7 in dem aus Kunststoff bestehenden Gehäuse 2 abgeschlossen ist, wird eine zuverlässige elektromagnetische Verträglichkeit gewährleistet.

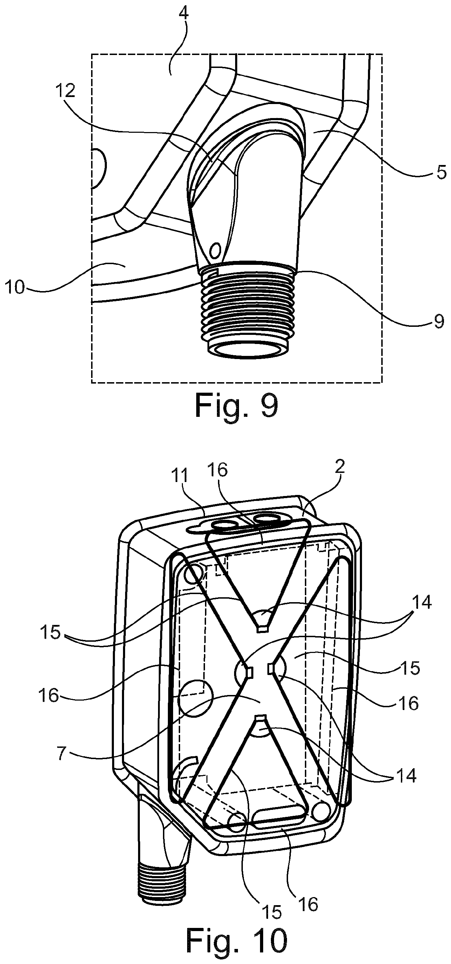

In Fig. 10 ist das aus Kunststoff bestehende Gehäuse 2 dargestellt, bei welchem das Sensorsystem 7 in um jeweils einen 90°-Winkel zueinanderstehende Lichtquellen 14 aufweist. Generell sind natürlich auch mehr oder weniger LEDs mit unterschiedlichen Ausleuchtungsbereichen möglich. Aufgrund dieser Anordnung strahlen die Lichtquellen 14, bspw. RGB-LED's, in verschiedene Abstrahlrichtungen 15, wobei das Licht homogen in die jeweilige Lichtauskoppelfläche 16 eingestrahlt wird.

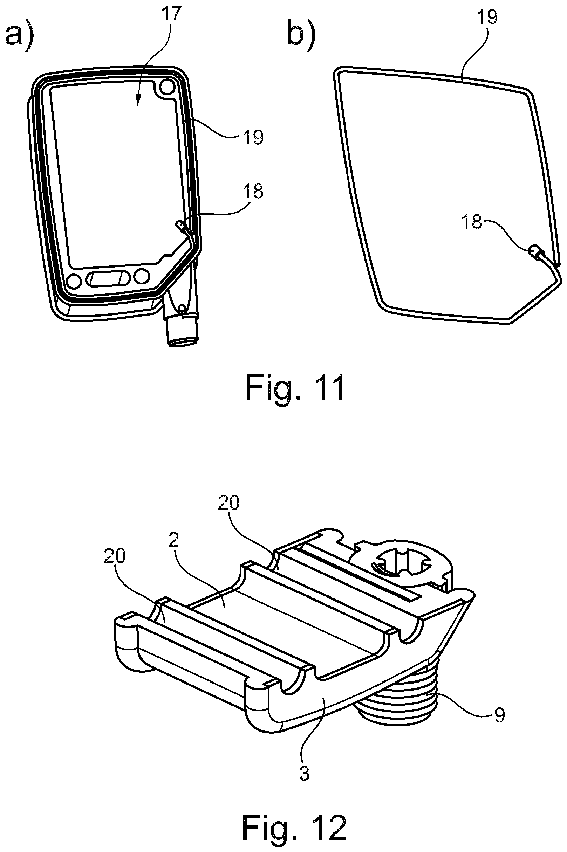

Fig. 11 zeigt ein weiteres Ausführungsbeispiel des Sensorsystems 17, welches eine zentrale Lichtquelle 18 umfasst, die Licht in einen am Rand des Inneren des Gehäuses 2 umlaufenden Lichtleiter 19 einspeist. Mittels der Leuchtflächen 16 können unterschiedliche Farben ausgestrahlt werden, insbesondere wenn die Leuchtfläche 16 transparent ausgebildet ist. So kann ein Sensorstatus einfach angezeigt werden, wenn die Sensoreinheit 1 stromlos ist und kein Licht aussendet.

Ein blaues Licht wird ausgestrahlt, wenn die Sensoreinheit 1 aktiv und betriebsbereit ist. Bei Ausstrahlung eines orangefarbenen Lichtes steht die Sensoreinheit 1 kurz vor einer Fehlfunktion und bei Ausstrahlen eines roten Lichtes hat die Sensoreinheit 1 eine Fehlfunktion. Farbe oder Position der Beleuchtung können verschiedene vordefinierte Funktionsmodi anzeigen.

In Fig. 12 ist ein Ausführungsbeispiel für eine Befestigung der Sensoreinheit 1 beispielsweise an einer Wand oder einer Produktionseinheit dargestellt. Dazu weist die Sensoreinheit 1 bodenseitig Durchgangsbohrungen 20 im aus Kunststoff bestehenden Gehäuse 2 auf. Durch diese Durchgangsbohrungen 20 werden nicht weiter dargestellte Schrauben durchgeführt und an der jeweiligen Wand bzw. dem Produktionsmittel befestigt. Der Schraubendruck wird hierbei über die die Seitenelemente 3, 4 homogen in die Sensoreinheit 1 eingeleitet. Hiermit sind deutlich höhere Drehmomente als bei hochgefüllten reinen Kunststoffsensoren möglich.

Bei der erfindungsgemäßen Lösung kann die Anzeigefunktionalität durch die bessere Sichtbarkeit aufgrund der Leuchtfläche 6 bzw. eines durch den Lichtleiter 19 gebildeten Leuchtrahmens verbessert werden. Ein rotierendes Lauflicht kann einen weiteren Informationsgehalt liefern.

## Patentansprüche

1. Sensoreinheit mit einem Gehäuse (2), einem Sensorsystem (7) und mit Metallelementen (3, 4, 5), wobei die Metallelemente ein Mantelelement (5) und Seitenelemente (3,4) umfassen, wobei das Gehäuse (2) vollständig aus einem Kunststoff besteht, welches mit den Metallelementen (3, 4, 5) ummantelt ist, wobei die Sensoreinheit als Gehäuse (2) ein lichtdurchlässiges Gehäuse (2) umfasst und mindestens eine Lichtquelle, wobei in dem lichtdurchlässigen Gehäuse (2) die mindestens eine Lichtquelle (14, 18) zur optischen Anzeige eines Zustandes des sich im Gehäuse (2) befindlichen Sensorsystems (7) angeordnet ist, wobei zwischen dem Mantelelement (5) und den Seitenelementen (3, 4) eine als Lichtauskoppelfläche dienende erhabene Wulst (11) des aus Kunststoff bestehenden Gehäuses (2) ausgebildet ist.

2. Sensoreinheit nach Anspruch 1, **dadurch gekennzeichnet, dass** die Metallelemente als Seitenelemente (3, 4) zur Abdeckung der Seiten des aus Kunststoff bestehenden Gehäuses (2) und als ein Mantelelement (5) zur Abdeckung des aus Kunststoff bestehenden Gehäuses (2) zwischen den Seitenelementen (3, 4) ausgebildet sind.

3. Sensoreinheit nach Anspruch 1, **dadurch gekennzeichnet, dass** die Metallelemente (3, 4, 5) stoffschlüssig mit dem aus Kunststoff bestehenden Gehäuse (2) verbunden sind.

4. Sensoreinheit nach Anspruch 2, **dadurch gekennzeichnet, dass** das aus Kunststoff bestehende Gehäuse (2) in die Metallelemente (3, 4, 5) eingespritzt ist.

5. Sensoreinheit nach Anspruch 2, **dadurch gekennzeichnet, dass** die Metallelemente (3, 4, 5) in dem Kunststoff zur Bildung eines nahtlosen Übergangs von einem Metallelement (3, 4) zu einem anderen Metallelement (5) eingelassen sind.

6. Sensoreinheit nach mindestens einem der vorhergehenden Ansprüche, **dadurch gekennzeichnet, dass** auf dem aus Kunststoff bestehenden Gehäuse (2) zwischen den Metallelementen (3, 4, 5) eine flächige Frontscheibe (6) angeordnet ist.

7. Sensoreinheit nach Anspruch 6, **dadurch gekennzeichnet, dass** die flächige Frontscheibe (6) stoffschlüssig mit dem aus Kunststoff bestehenden Gehäuse (2) verbunden ist.

8. Sensoreinheit nach Anspruch 6, **dadurch gekennzeichnet, dass** die flächige Frontscheibe (6) durch einen Spritzgießprozess direkt in das aus Kunststoff bestehende Gehäuse (2) integriert ist.

9. Sensoreinheit nach mindestens einem der vorhergehenden Ansprüche, **dadurch gekennzeichnet, dass** an den Seitenelementen (3, 4) und/oder dem Mantelelement (5) mindestens eine punktuelle oder linienförmige Lichtauskoppelfläche ausgebildet ist.

10. Sensoreinheit nach mindestens einem der vorhergehenden Ansprüche, **dadurch gekennzeichnet, dass** in dem aus Kunststoff bestehenden Gehäuse (2) mehrere Lichtquellen (14) mit verschiedenen Abstrahlrichtungen (15) zur Übertragung des abgestrahlten Lichtes in verschiedene Lichtauskoppelflächen (16) angeordnet sind.

11. Sensoreinheit nach mindestens einem der vorhergehenden Ansprüche, **dadurch gekennzeichnet, dass** in dem aus Kunststoff ausgebildeten Gehäuse (2) eine zentrale Lichtquelle (18) positioniert ist, die mit einem Lichtleiter (19) zur Übermittlung des von der zentralen Lichtquelle (18) erzeugten Lichtes an eine Lichtauskoppelfläche verbunden ist.

12. Sensoreinheit nach mindestens einem der vorhergehenden Ansprüche, **dadurch gekennzeichnet, dass** mindestens ein elektrisches Anschlusselement (9) integraler Bestandteil des aus Kunststoff bestehenden Gehäuses (2) ist, wobei das über dem Anschlusselement (9) liegende Metallelement (5, 10) eine mit dem Anschlusselement (9) fluchtende Ausnehmung (12) zum Umfassen des elektrischen Anschlusselementes (9) aufweist.

13. Sensoreinheit nach mindestens einem der vorhergehenden Ansprüche, **dadurch gekennzeichnet, dass** in dem aus Kunststoff ausgebildeten Gehäuse (2) Durchgangsbohrungen (20) zur Befestigung der Sensoreinheit (1) ausgebildet sind.

## Claims

1. A sensor unit having a housing (2), having a sensor system (7) and having metal elements (3, 4, 5), wherein the metal elements comprise a jacket element (5) and side elements (3, 4), wherein the housing (2) consists completely of a plastic that is covered by the metal elements (3, 4, 5), wherein the sensor unit comprises a light permeable housing (2) as the housing (2) and at least one light source, wherein the at least one light source (14, 18) is arranged in the light permeable housing (2) for the optical display of a status of the sensor system (7) located in the housing (2), and wherein a raised bead (11) of the housing (2) consisting of plastic that serves as a light uncoupling surface is formed between the jacket element (5) and the side elements (3, 4).

2. A sensor unit in accordance with claim 1, **characterized in that** the metal elements are formed as side elements (3, 4) to cover the sides of the housing (2) consisting of plastic and as a jacket element (5) to cover the housing (2) consisting of plastic between the side elements (3, 4).

3. A sensor unit in accordance with claim 1, **characterized in that** the metal elements (3, 4, 5) are connected with material continuity to the housing (2) consisting of plastic.

4. A sensor unit in accordance with claim 2, **characterized in that** the housing (2) consisting of plastic is injected into the metal elements (3, 4, 5).

5. A sensor unit in accordance with claim 2, **characterized in that** the metal elements (3, 4, 5) are embedded into the plastic to form a seamless transition from one metal element (3, 4) to another metal element (5).

6. A sensor unit in accordance with at least one of the preceding claims, **characterized in that** a planar front pane (6) is arranged between the metal elements (3, 4) on the housing (2) consisting of plastic.

7. A sensor unit in accordance with claim 6, **characterized in that** the planar front pane (6) is connected with material continuity to the housing (2) consisting of plastic.

8. A sensor unit in accordance with claim 6, **characterized in that** the planar front pane (6) is directly integrated into the housing (2) consisting of plastic by an injection molding process.

9. A sensor unit in accordance with at least one of the preceding claims, **characterized in that** at least one dot-like or linear light uncoupling surface is formed at the side elements (3, 4) and/or at the jacket element (5).

10. A sensor unit in accordance with at least one of the preceding claims, **characterized in that** a plurality of light sources (14) having different irradiation directions (15) for transmitting the irradiated light into different light uncoupling surfaces (16) are arranged in the housing (2) consisting of plastic.

11. A sensor unit in accordance with at least one of the preceding claims, **characterized in that** a central light source (18) is positioned in the housing (2) formed from plastic and is connected to a light guide (19) to transmit the light generated by the central light source (18) to a light uncoupling surface.

12. A sensor unit in accordance with at least one of the preceding claims, **characterized in that** at least one electrical connector element (9) is an integral element of the housing (2) consisting of plastic, with the metal element (5, 10) disposed above the connector element (9) having a cutout (12) aligned with the connector element (9 to encompass the electrical connector element (9).

13. A sensor unit in accordance with at least one of the preceding claims, **characterized in that** passage bores (20) are formed in the housing (2) consisting of plastic to fasten the sensor unit (1).

## Revendications

1. Ensemble capteur comportant un boîtier (2), un système capteur (7) et des éléments métalliques (3, 4, 5), les éléments métalliques comprenant un élément enveloppe (5) et des éléments latéraux (3, 4),
dans lequel
le boîtier (2) est entièrement constitué en une matière plastique qui est enveloppée par les éléments métalliques (3, 4, 5),
l'ensemble capteur comprend à titre de boîtier (2) un boîtier translucide (2) et au moins une source de lumière, ladite au moins une source de lumière (14, 18) étant disposée dans le boîtier translucide (2) pour l'affichage optique d'un état du système capteur (7) situé dans le boîtier (2),
un bourrelet surélevé (11) du boîtier (2) constitué en matière plastique est réalisé entre l'élément enveloppe (5) et les éléments latéraux (3, 4) et sert de surface d'éjection de lumière.

2. Ensemble capteur selon la revendication 1,
**caractérisé en ce que**
les éléments métalliques sont réalisés sous forme d'éléments latéraux (3, 4) pour recouvrir les côtés du boîtier (2) constitué en matière plastique et sous forme d'élément enveloppe (5) pour recouvrir le boîtier (2) constitué en matière plastique entre les éléments latéraux (3, 4).

3. Ensemble capteur selon la revendication 1,
**caractérisé en ce que**
les éléments métalliques (3, 4, 5) sont reliés par coopération de matière au boîtier (2) constitué en matière plastique.

4. Ensemble capteur selon la revendication 2,
**caractérisé en ce que**
le boîtier (2) constitué en matière plastique est surmoulé dans les éléments métalliques (3, 4, 5).

5. Ensemble capteur selon la revendication 2,
**caractérisé en ce que**
les éléments métalliques (3, 4, 5) sont encastrés dans la matière plastique pour former une transition sans bavure d'un élément métallique (3, 4) à un autre élément métallique (5).

6. Ensemble capteur selon l'une au moins des revendications précédentes,
**caractérisé en ce que**
une plaque frontale surfacique (6) est disposée sur le boîtier (2) constitué en matière plastique entre les éléments métalliques (3, 4, 5).

7. Ensemble capteur selon la revendication 6,
**caractérisé en ce que**
la plaque frontale surfacique (6) est reliée par coopération de matière au boîtier (2) constitué en matière plastique.

8. Ensemble capteur selon la revendication 6,
**caractérisé en ce que**
la plaque frontale surfacique (6) est directement intégrée dans le boîtier (2) constitué en matière plastique par un procédé de moulage par injection.

9. Ensemble capteur selon l'une au moins des revendications précédentes,
**caractérisé en ce que**
au moins une surface d'éjection de lumière ponctuelle ou linéaire est réalisée sur les éléments latéraux (3, 4) et/ou sur l'élément enveloppe (5).

10. Ensemble capteur selon l'une au moins des revendications précédentes,
**caractérisé en ce que**
plusieurs sources de lumière (14) ayant différentes directions d'émission (15) sont disposées dans le boîtier (2) constitué en matière plastique pour transmettre la lumière émise dans différentes surfaces d'éjection de lumière (16).

11. Ensemble capteur selon l'une au moins des revendications précédentes,
**caractérisé en ce que**
une source de lumière centrale (18) est positionnée dans le boîtier (2) constitué en matière plastique, qui est reliée à un guide de lumière (19) pour transmettre la lumière générée par la source de lumière centrale (18) à une surface d'éjection de lumière.

12. Ensemble capteur selon l'une au moins des revendications précédentes,
**caractérisé en ce que**
au moins un élément de connexion électrique (9) est un composant intégral du boîtier (2) constitué en matière plastique, l'élément métallique (5, 10) situé au-dessus de l'élément de connexion (9) présentant un évidement (12) aligné avec l'élément de connexion (9) pour enfermer l'élément de connexion électrique (9).

13. Ensemble capteur selon l'une au moins des revendications précédentes,
**caractérisé en ce que**
des perçages traversants (20) pour la fixation de l'ensemble capteur (1) sont ménagés dans le boîtier (2) constitué en matière plastique.
